# EUROPÄISCHE PATENTSCHRIFT

(11) **EP 3 460 893 B1**
(45) Veröffentlichungstag und Bekanntmachung des Hinweises auf die Patenterteilung: **08.01.2020**
(21) Anmeldenummer: 17192263.6
(22) Anmeldetag: 21.09.2017
(51) Int. Cl.: H01M 10/63, H01M 10/052, H01M 10/647, H01M 10/6572, H01M 10/615, H01M 10/655, H01M 10/613, H01M 10/658, H01M 10/42, H01M 10/48, G01N 23/20033

(54) **VORRICHTUNG ZUM EINSPANNEN UND TEMPERIEREN VON FLACHEN PROBEN FÜR DIE RÖNTGENDIFFRAKTOMETRIE**
DEVICE FOR GRIPPING AND TEMPERING OF FLAT SPECIMENS FOR X-RAY DIFFRACTOMETRY
DISPOSITIF DE MONTAGE ET DE THERMOSTATISATION D'ÉCHANTILLONS PLATS POUR DIFFRACTOMÉTRIE DE RAYONS X

(43) Veröffentlichungstag der Anmeldung: 27.03.2019
(73) Patentinhaber: Helmholtz-Zentrum Geesthacht Zentrum für Material- und Küstenforschung GmbH, 21502 Geesthacht (DE)
(72) Erfinder: Kriele, Armin, 81543 München (DE)
(74) Vertreter: Uexküll & Stolberg

(56) Entgegenhaltungen:
- DE-B3-102014 211 901
- JP-A- H06 102 208
- JP-A- H06 118 039
- US-A1- 2015 071 409

## Beschreibung

### TECHNISCHES GEBIET

Die Erfindung betrifft eine Vorrichtung für zum Einspannen und exaktem Temperieren auf einen vorgegebenen Sollwert (Heizen u. Kühlen) von flachen Proben, insbesondere von Pouch-Batteriezellen für die Röntgendiffraktometrie. Die Vorrichtung umfasst ein Gehäuse mit einer Probenhalterung, die gegeneinander verspannbare Haltelemente zum Einspannen der Probe aufweist, wenigstens zwei Röntgenfenster zum Ein- und Auslassen von Röntgenstrahlen, sowie mindestens eine erste Temperiereinrichtung zum Temperieren der Probe. Ferner betrifft die Erfindung die Verwendung einer derartigen Vorrichtung zum Einspannen von Proben für die zerstörungsfreie Bestimmung des Ladezustands einer Batteriezelle, insbesondere einer Pouch-Batteriezelle.

### HINTERGRUND DER ERFINDUNG

Lithium-Ionen-Batterien bzw. Lithium-Ionen-Akkumulatoren stellen unter den elektrischen Energiespeichern die derzeit für mobile Anwendungen am weitesten verbreitete Variante dar. Die Lithium-Ionen-Zellen werden meist als Akkumulatoren, derzeit weltweit vorzugsweise vor allem in Consumergeräten (Mobiltelefone, Kameras, Laptops und Kraftfahrzeugen), eingesetzt und zeichnen sich durch eine hohe spezifische Energie aus. Die Pouch-Zelle, auch Pouch-Bag-Zelle genannt, ist als eine weit verbreitete Bauform eines Lithium-Ionen-Akkumulators bekannt. Bei diesen Akkumulatoren werden die gestapelten oder gefalteten aktiven Schichten von einer flexiblen, meist aus Aluminium beschichteten Polymerfolien eingeschlossen, die am Ende der Fertigung vakuumiert wird. Dabei werden die Zellschichten verpresst und fixiert, bleiben aber meist flexibel. Lediglich die äußeren Anschluss-Elektroden verlassen die beutelförmige Zellumhüllung. Eine Pouch-Zelle beinhaltet alle für eine Batterie erforderlichen Elemente wie Kathode, Anode, Separator, Elektrolyt und elektrische Zu- und Ableiter. Die dünne äußere Umhüllung kann leicht mit der Röntgenintensität marktüblicher Röntgendiffraktometer durchdrungen werden.

Für die Entwicklung von leistungsfähigen Batterien, sind Kenntnisse über die internen Vorgänge während der Ladezyklen aber auch während des Entladens von entscheidender Bedeutung. Um diese Vorgänge genau zu studieren, bedient man sich sogenannter *in-situ* Untersuchungsverfahren, wie der Röntgendiffraktometrie, bei der mit Hilfe von Röntgenstrahlen Aussagen über die Art der Bindung, die Kristallstruktur sowie über die Art der vorhandenen Phasen einer Probe gemacht werden können. Die erzeugte Röntgenstrahlung dringt in die Batterieprobe ein und wird dabei an den Kristall- oder Quasikristallstrukturen gebeugt. Durch Messung der Streuwinkel und der Intensitäten der gebeugten Strahlen kann ein dreidimensionales Bild der Elektronendichte im Kristall erzeugt werden. Aus dieser Elektronendichte können sowohl die mittleren Positionen der Atome im Kristall, als auch ihre chemischen Bindungen, ihre Fehlordnungen und weitere Informationen bestimmt werden. Über die Bragg' sche Gleichung können so Aussagen über Netzebenenabstand getroffen werden. Dies erlaubt eine quantitative Bestimmung der Phasenanteile in Abhängigkeit vom Ladezustand des Batteriematerials.

Bei der Röntgendiffraktometrie wird das in der Probe gestreute und unter dem Winkel 2θ austretende Röntgenlicht mittels eines für Röntgenlicht sensitiven Sensors, dem Detektor, auf der Ausgangsseite detektiert. In einem (eindimensionalen) Diffraktogramm werden die gemessenen Strahlungsintensitäten gegen den Winkel zwischen Strahlungsquelle, Probe und Detektor (2θ-Winkel) aufgetragen. Da sich beim Laden- und Entladen eines Akkumulators, wie einer Lithium-Ionen-Batterie, der Abstand der Atomebenen in den Anoden- und Kathodenmaterialen durch die Ein-/ u. Auslagerung der Lithium Ionen ändert, verändert sich die Position der Bragg-Reflexe, was mit Röntgendiffraktion gemessen werden kann.

Allerdings gehen Ladezyklen von Batterien auch immer mit einer Veränderung der Temperatur einher, so dass dieser Faktor zu berücksichtigen ist.

Um eine aussagekräftige Analyse durchzuführen, ist gerade bei in-situ Untersuchungen die Aufrechterhaltung konstanter Umgebungsbedingungen sicherzustellen. Im Rahmen von *in-operando* Untersuchungen (Laden und Entladen der Batterie) ist das Einhalten einer vorgegebenen SOLL-Temperatur für qualitative Aussagen von hoher Bedeutung. Von besonderem Interesse bei der Batterieentwicklung für die Elektromobilität ist das Ladeverhalten bei realen Umgebungstemperaturen (Sommer/Winter). Hierbei sind Temperiereinrichtungen, die die Batterie auf eine vorgegebene SOLL-Temperatur einstellen von besonderer Bedeutung.

Aus der DE 10 2014 211 901 B3 ist ein Probenträger für diffraktometrische Untersuchungen von Batterien bekannt. Der Probenträger ist als radartige Struktur ausgebildet und weist Vertiefungen auf, in die die zu untersuchenden Batterien eingesetzt werden. Die Vertiefung wird durch einen deckelartigen Verschluss verschlossen, der eine mittige Öffnung für den Strahleneintritt aufweist. Am Boden der Vertiefung befindet sich eine Öffnung für den Strahlenaustritt. Diese Vorrichtung ist aber zum einen auf Knopfzellenbatterien (Coin-Cells) beschränkt. Coin-Cells sind Batterien mit einem massiven Metallgehäuse welches nur von sehr intensiver Röntgenstrahlung (Synchrotronstrahlung) oder Neutronenstrahlung durchdrungen werden kann. Deren Einsatz beschränkt sich somit auf die wenigen weltweit vorhandenen Großforschungseinrichtungen, die solche Strahlquellen zur Verfügung stellen. Um temperaturabhängige Messungen von Proben durchzuführen, werden in der DE 10 2014 211 901 B3 Peltier-Elemente verwendet. Bei Peltier-Elementen handelt es sich um elektrothermische Wandler, die basierend auf dem Peltier-Effekt bei Stromdurchfluss eine Temperaturdifferenz erzeugen, die zur Temperierung eines Bauteils, d.h. zum Heizen und auch zum Kühlen, verwendet werden kann. Die Peltier-Elemente sind zwischen der Innenwand der radartigen Trägerstruktur und der Batterie angeordnet und temperieren diese. Die aus der DE 10 2014 211 901 B3 bekannte Heiz- und Kühlanordnung wirkt unmittelbar auf die zu untersuchenden Batterien, jedoch wirken die Temperaturveränderungen der Batterie der Ladezyklen auch unmittelbar auf das sie umgebende Gehäuse, wodurch nicht sichergestellt werden kann, dass die Temperatur der Batterie selbst bei Kühlung durch das Peltier-Element konstant bleibt. Gerade bei Akkumulatoren mit höherer Leistung erweist sich die Einhaltung einer vorgegebenen SOLL-Temperatur als schwierig.

Aus der JP H06 118 039 A ist eine Wärmeanalysevorrichtung für Proben bekannt, die einen runden, im Querschnitt Doppel-T-förmigen Probenhalter aufweist. Der Probenhalter umfasst obere und untere horizontale Abschnitt, die durch einen vertikalen Verbindungsabschnitt miteinander verbunden sind, der zum Halten der Probe dient. Die Probe wird mittels eines Fixierelements am vertikalen Verbindungsabschnitt festgelegt. Der Probenhalter ist in einem Gehäuse aufgenommen, dass seitlich zwei Öffnung für die Durchführung von Röntgenstrahlen aufweist. Ober- und Unterseite des Probenhalters sind von der Innenwandung des Gehäuses beabstandet und bilden mit diesem einen Gasraum. In dem Gasraum ist an der Außenseite der Probenhalterung ein Heizelement vorgesehen.

Die US 2015/0071409 A1 beschreibt eine temperaturkontrollierte Kammer für Röntgenuntersuchungen mit einem ersten und einem zweiten Gehäuseteil. Das erste Gehäuseteil umfasst einen Probentisch, auf dessen Oberseite eine Probe abgelegt ist. Unterhalb der Probe ist eine Temperiereinrichtung in Form eines Peltierelements vorgesehen, um die Probe zu erwärmen oder zu kühlen. Das zweite Gehäuseteil weist eine einseitig offene Kammer auf, in die der Probentisch des ersten Gehäuseteils eingeschoben wird. Wenn die Gehäuseteile miteinander verbunden sind, ist der Probentisch in der Kammer des zweiten Gehäuseteils unter einem in der Kammerwandung ausgebildeten Röntgenfenster platziert, durch das Röntgenstrahlen in die Probe gelangen. Die Röntgenstrahlen werden reflektiert und treten durch das Fenster aus der Kammer wieder aus.

Es ist Aufgabe der vorliegenden Erfindung, eine Möglichkeit zu schaffen, mit der Ladezustands einer Batteriezelle, insbesondere einer Pouch-Batteriezelle bei Einhaltung einer vorgegebenen SOLL-Temperatur analysiert werden kann.

### ZUSAMMENFASSUNG DER ERFINDUNG

Die der Erfindung zugrunde liegende Aufgabe wird durch eine Vorrichtung mit den Merkmalen den Anspruchs 1 sowie durch deren Verwendung gelöst.

Erfindungsgemäß ist vorgesehen, dass jedes der Halteelemente wenigstens eine erste Temperiereinrichtung umfasst, die am jeweiligen Halteelement angeordnet bzw. angebracht ist und mit diesem in Wärmeübertragungsverbindung steht. Die wenigstens eine erste Temperiereinrichtung ist mit dem Gehäuse thermisch gekoppelt und steht mit diesem in Wärmeübertragungsverbindung. Neben den ersten Temperatureinrichtungen ist wenigstens eine zweite Temperiereinrichtung vorgesehen, die dazu eingerichtet ist, Wärme, die von der ersten Temperiereinrichtung an das Gehäuse abgegeben wird, aus dem Gehäuse nach außen abzuführen und/oder Wärme von außen in das Gehäuse einzubringen. Auf diese Weise kann Wärme, die durch das Laden der Batterie erzeugt wird, von dem Halteelement an die erste Temperiereinrichtung abgegeben und über die zusätzliche Wärmebrücke zum Gehäuse in die Gehäusewandung geleitet werden, wo die zweite Temperiereinrichtung diese Wärme effektiv abführen kann.

In bevorzugter Weise ist vorgesehen, dass die erste Temperiereinrichtung eine in Bezug auf das Gehäuse innere Temperiereinrichtung ist, d.h., dass die Probenhalterung und die erste Temperiereinrichtung in dem Gehäuse aufgenommen sind und die zweite Temperiereinrichtung eine äußere Temperiereinrichtung ist, d.h. außenseitig am dem Gehäuse und/oder zumindest teilweise außenseitig in der Gehäusewandung angebracht ist.

Unter dem Begriff "Temperieren" ist im Sinne der Erfindung zu verstehen, dass die ersten und zweiten Temperiereinrichtungen dazu eingerichtet sind, zu kühlen oder zu heizen oder - je nach Bedarf - zu kühlen und zu heizen.

Mit Hilfe der vorliegenden Erfindung ist es möglich, Proben bei gezielt einstellbaren Temperaturen zerstörungsfrei zu analysieren, und im Falle von Batterien als Probe, ihre Eigenschaften während der Lade- und Entladezyklen zu analysieren, was gerade im Bereich der Elektromobilität von Relevanz ist. Durch das gebotene effektive Thermomanagement können reale Einsatzbedingungen von Batterien gezielt angesteuert werden. Dies trägt zu einer hohen Qualität der Analyseergebnisse bei. Die vorliegende Erfindung ist so konzipiert, dass die zu untersuchende Probe in sog. Durchstrahlungstechnik untersucht wird. Man erhält somit simultan Erkenntnisse über alle Komponenten der Probe, die vom Röntgenstrahl durchleuchtet werden. Die erfindungsgemäße Vorrichtung ist in Verbindung mit Röntgendiffraktometern uneingeschränkt verwendbar und wird zwischen dem Röntgenstrahlenemitter (Röntgenröhre) und dem Detektor derart platziert, dass die Röntgenstrahlen durch das eine Röntgenfenster eindringen, die Probe durchdringen und durch das andere Röntgenfenster wieder austreten, um auf den Detektor zu treffen.

Im Gegensatz zu der aus der DE 10 2014 211 901 B3 bekannten Vorrichtung kann die vorliegende Erfindung auch an handelsüblichen Röntgendiffraktometern, wie sie gängiger Weise in Industrie und Forschung zur Materialanalyse verwendet werden und weit verbreitet sind, eingesetzt werden. Insbesondere wird durch die vorliegende Erfindung dem limitierten Platzangebot in solchen Anlagen Rechnung getragen. Eine Adaptierbarkeit auf alle auf dem Markt befindlichen Gerätetypen ist dabei gegeben. Nach einer weiteren Ausführungsform der Erfindung ist eine mit der Vorrichtung gekoppelte Justiervorrichtung vorgesehen, die dazu angepasst ist, die Position der in der Vorrichtung aufgenommenen Probe entlang der drei Raumachsen zu variieren.

Nach einer weiteren Ausführungsform der Erfindung sind die Halteelemente als vorzugsweise parallel angeordnete Platten ausgeführt. Damit eignet sich die Vorrichtung insbesondere für die Untersuchung von flachen Proben, die zwischen den Halteelementen aufgenommen werden können. Das macht die erfindungsgemäße Vorrichtung gerade für die Analyse von Pouch-Batteriezellen und gerade für die Untersuchung von Lithium-Ionen-Akkumulatoren interessant. Die plattenförmige Ausgestaltung der Halteelemente schafft hierbei eine größtmögliche Kontaktfläche, was den Wärmeaustausch maßgeblich begünstigt. Der Wärmekontakt unebener Proben kann durch Einbringen flexibler Wärmeleitfolien oder Pads oder sonstiger Polster zwischen Probe und Halteplatte optimiert werden.

Die vorliegende Erfindung ist nicht auf Proben in Form von Batterien beschränkt, sondern erlaubt es, jede andere flache Probe zu temperieren und gleichzeitig mittels Röntgenstrahlung zu charakterisieren. Der Probenhalter ist so ausgelegt, dass er auch an Synchrotron- und Neutronenstrahlquellen eingesetzt werden kann. Limitierender Faktor für die Dicke der flachen Probe ist lediglich deren Materialzusammensetzung, welches bei gegebener Dicke noch von der verwendeten Strahlung durchdrungen werden können muss.

Vorzugsweise sind die ersten Temperiereinrichtungen an den Halteelementen auf voneinander abgewandten Seiten der Halteelemente angebracht. Mit anderen Worten, die Halteelemente besitzen einander zugewandte Kontaktflächen zum Angreifen der Probe. Auf der von der Kontaktfläche abgewandten Seite des jeweiligen Halteelements ist zumindest eine erste Temperiereinrichtung vorgesehen. Die gegenüberliegende, der Probe abgewandte Seite der ersten Temperiereinrichtung ist ihrerseits mit dem äußeren Gehäuse thermisch gekoppelt, um die transportierte Wärme an dieses abzugeben. Hierbei kann der Kontakt direkt oder über ein Wärmeübertragungselement mit hoher Wärmeleitfähigkeit erfolgen. Vorzugsweise weist das Wärmeübertragungselement eine höhere Wärmeleitfähigkeit als die Gehäusewandung auf.

Eine weitere Ausführungsform der Erfindung sieht ferner vor, dass das Gehäuse so ausgestaltet ist, dass seine Gehäusewandung wenigstens eine Öffnung oder ein Fenster aufweist, in das ein Wärmeübertragungselement eingesetzt ist, wobei das Wärmeübertragungselement mit der ersten und der zweiten Temperiereinrichtung gekoppelt ist. Auf diese Weise kann der Wärmetransport zwischen erster und zweiter Temperiereinrichtung direkter erfolgen. So kann beispielsweise gehäuseinnenseitig die erste Temperiereinrichtung an dem Wärmeübertragungselement anliegen, während außenseitig eine zweite Temperiereinrichtung an dem Wärmeübertragungselement anliegt.

Eine bevorzugte Ausführungsform sieht vor, dass als erste Temperiereinrichtung eine oder mehrere Peltier-Elemente vorgesehen sind. Peltier-Elemente sind klein in ihrer Bauform und decken bei hoher Temperaturstabilität einen großen Temperaturbereich ab. Die vom Peltier-Element erzeugte Wärme oder Kälte kann effektiv der Probe zugeführt werden. Im Falle des Kühlens wird kontinuierlich der Probe Energie entzogen und aus dem Gesamtsystem herausgeführt. Hierzu wird erfindungsgemäß die zweite Temperiereinrichtung vorzugsweise auf Basis einer Luft- oder Wasserkühlung eingesetzt.

Nach einer weiteren Ausführungsform ist vorgesehen, dass die inneren Probenhalteelemente eine hohe Wärmeleitfähigkeit aufweisen. Als eine hohe Wärmeleitfähigkeit kann insbesondere eine Wärmeleitfähigkeit von wenigstens 200 W/(m·K) angesehen werden. Dadurch wird die Temperatur schnell und gleichmäßig über die gesamte Probenoberfläche verteilt und ein Temperaturgradient minimiert. Vorzugsweise sind die Halteelemente Metallplatten, beispielsweise aus Aluminium. Auch das Gehäuse oder zumindest die Gehäusewandung im Bereich der ersten und zweiten Temperiereinrichtung ist vorzugsweise aus Metall.

Nach einer weiteren Ausführungsform der Erfindung sind die Halteelemente federvorgespannt oder es sind Mittel vorgesehen, zum gegenseitigen Verspannen der Halteelemente. Auf diese Weise integrieren die Halteelemente die Funktionen "Wärmeaustausch mit der Probe" und "Fixierung der Probe in dem Gehäuse" in vorteilhafter Weise. Auf zusätzliche separate Fixiermittel kann verzichtet und das Gehäuse kompakt gestaltet werden. Die Probe kann auf diese Weise beliebig innerhalb der beiden Halteelemnte platziert werden, so dass unterschiedliche Positionen der Probe analysiert werden können.

Eine weitere Ausführungsform sieht vor, dass die Probenhalterung mit Wärmeentkopplungselementen in dem Gehäuse befestigt ist, so dass eine direkte Wärmeübertragung zwischen Probenhalterung und Gehäuse nicht stattfindet, sondern nur über die erste Temperiereinrichtung erfolgt Zu diesem Zwecke kann die Probenhalterung im Gehäuse mit Schrauben befestigt werden, die mit Keramikscheiben unterlegt und in Keramikhülsen geführt sind, um eine Wärmebrücke zwischen äußerem Gehäuse und innerer Probenhalterung zu unterbinden.

Generell kann die Probenhalterung als ein inneres Gehäuse ausgestaltet sein, das in dem äußeren Gehäuse aufgenommen ist, wobei die erste Temperiereinrichtung an das äußere Gehäuse gekoppelt ist und die zweite Temperiereinrichtung Wärme aus dem Gehäuse aus- bzw. in das Gehäuse einführen kann.

Ferner kann ein Luftspalt oder ein Freiraum zwischen Probenhalterung (inneres Gehäuse) und der inneren Gehäusewandung des äußeren Gehäuses dazu beitragen, die direkte Wärmeübertragung zwischen Gehäuse und Probenhalterung zu minimieren und auf die erste Temperiereinrichtung zu konzentrieren. Selbstverständlich sind auch andere geeignete Wärmeentkopplungselemente und/oder -maßnahmen zwischen Probenhalterung und Gehäuse möglich.

Nach einer weiteren Ausführungsform der Erfindung umfasst die Vorrichtung mehrere zweite Temperiereinrichtungen, die vorzugsweise an und/oder in der Gehäusewandung des äußeren Gehäuses vorgesehen sind.

Die zweiten Temperiereinrichtungen können räumlich derart an und/oder in der äußeren Gehäusewandung bzw. dem äußeren Gehäuse vorgesehen sein, dass sie jeweils einer der ersten Temperiereinrichtungen zugeordnet sind, also direkt gegenüber liegen. Dabei ist jeweils wenigstens eine zweite Temperiereinrichtung im thermischen Kopplungsbereich zwischen einer ersten Temperiereinrichtungen und dem äußeren Gehäuse angeordnet. Das bedeutet, eine zweite Temperiereinrichtung ist in dem Bereich platziert, in dem eine erste Temperiereinrichtung in wärmeübertragendem Kontakt mit der Gehäusewandung steht. Anders ausgedrückt, eine erste Temperiereinrichtungen und eine zweite Temperiereinrichtung können so positioniert sein, dass die erste und die zweite Temperiereinrichtung einem gemeinsamen Gehäusewandabschnitt zugeordnet und durch den gemeinsamen Gehäusewandabschnitt voneinander getrennt sind. So sind eine erste und eine zweite Temperiereinrichtung so angeordnet, dass ihr jeweiliger Wärmetransport bzw. ihr Wärmeaustausch primär über den gemeinsamen Gehäusewandabschnitt stattfindet. Die zweite Temperiereinrichtung kann die ersten Temperiereinrichtungen wirkungsvoll unterstützen, wenn diese eine große Wärmemenge aus der Probe zu- oder abführen müssen.

Nach einer weiteren Ausführungsform der Erfindung umfasst die zweite Temperiereinrichtung aktive und/oder passive Mittel zum Zu- und/oder Abführen von Wärme in die Gehäusewandung. Als mögliche Mittel für die passive Kühlung, die z.B. auf freier Konvektion basieren kann, kommen Kühlrippen, Radiatoren oder ähnliche Mittel in Frage. Für eine aktive Temperierung kann die Wärmeenergie mithilfe eines Lüfters oder einer Flüssigkeitspumpe transportiert werden. So kann die Gehäusewandung Temperierleitungen oder -kanäle aufweisen, durch die ein Temperiermedium, wie Wasser oder ein Gas strömt. Diese zweiten Temperiereinrichtungen können in einen Temperierungskreislauf, beispielsweise einen Kühlwasserkreislauf, einbindbar sein. Mehrere zweite Temperiereinrichtungen können jeweils an einen eigenen Temperierungskreislauf angeschlossen sein. Nach einer weiteren Ausführungsform ist jedoch vorgesehen, dass mehrere zweite Temperiereinrichtungen an einen gemeinsamen Temperierungskreislauf angeschlossen sind. Die zweiten Temperiereinrichtungen können außenseitig am Gehäuse angebracht oder zumindest teilweise in die Gehäusewandung integriert sein.

Eine weitere Ausführungsform der Erfindung sieht Kombinationen von aktiver und passiver Temperierung für die zweite Temperiereinrichtung vor. So kann beispielsweise eine aktiv/passive Lufttemperierung dadurch implementiert werden, dass ein Lüfter in Kombination mit Kühlrippen verwendet wird.

Die erfindungsgemäße Vorrichtung kann ohne Kryogene (tiefkalte Flüssigkeiten o. Gase) oder andere spezielle Kühlflüssigkeiten arbeiten. Stattdessen kann in der zweiten Temperiereinrichtung einfach Wasser (z.B. in Form eines Wasser-Kreislaufes) zum Einsatz kommen. In der Vorrichtung findet der thermoelektrische Effekt sog. Peltier-Elemente Anwendung. Untersuchungen haben gezeigt, dass es die Erfindung erlaubt, drei physikalische Prozesse simultan ablaufen zu lassen:
1. **Temperieren** von flachen Proben auf einen vorgegebenen Sollwert im Bereich von -40°C bis +60°C. Realisiert durch eine erste (innere) Temperiereinrichtung auf Basis von Peltier-Elementen. Zu- und Abfuhr der Wärmeenergie realisiert durch eine zweite (äußere) Temperiereinrichtung auf Basis von Luft- bzw. Wasserkühlung.
2. Im Falle von elektrisch aktiven Proben wie Batterien das **Zyklisieren** (in operando) von Strom- und Spannung (Laden- / Entladen) bei gleichzeitiger Aufnahme aller elektrischen Parameter wie Ladungstransport, Kapazität, innerer Widerstand, Strom, Spannung etc., realisiert durch Anschlußmöglichkeit an z.B. Bi-Potentiostaten.
3. Zerstörungsfreie Materialanalyse mittels **Röntgendiffraktion** (in-situ), realisiert durch Ein- und Austrittsfenster für die Röntgenstrahlung, sowie Halten der Probe durch Verspannelemente und Justagemöglichkeit.

Nach einer weiteren Ausführungsform der Erfindung ist ein Temperaturkontrolleinrichtung vorgesehen, die in Wirkverbindung mit den ersten Temperiereinrichtungen und/oder der wenigstens einen zweiten Temperiereinrichtung steht und die dazu eingerichtet ist, eine Temperatur der Probe durch Steuerung/Regelung der ersten Temperiereinrichtungen und/oder zweiten Temperiereinrichtung einzustellen. Als Messglied kommt hier grundsätzlich die IST-Temperatur der Probe in Betracht.

Eine weitere Ausführungsform der Erfindung sieht vor, dass die zweite Temperiereinrichtung Mittel zur aktiven und/oder passiven Lufttemperierung aufweist und dass die Temperaturkontrolleinrichtung derart eingerichtet, dass die Regelung der Temperatur der Probe auf einen SOLL-Wert durch Regelung der ersten Temperiereinrichtung erfolgen kann, beispielsweise durch Regelung der Strom- oder Spannungsversorgung eines Netzteils für Peltier-Elemente. Für die luftgekühlte Auslegung wird mittels eines Temperatursensors die IST-Temperatur der Probe als Rückführsignal an einen Temperaturregler rückgeführt und dann zur Regelung eines Netzteils zur Energieversorgung der ersten Temperiereinrichtungen verwendet. So wird die Temperatur der Probe durch Regelung der Spannung der Peltier-Elemente (Stellglied) eingestellt. Die zweite Temperiereinrichtung ist vorzugsweise an der Außenseite der Gehäusewandung angebracht.

Eine weitere Ausführungsform der Erfindung sieht vor, dass zur Messung und Regelung der Temperatur der Probe ein Temperatursensor (Thermoelement) in einer entsprechenden Aussparung an einem der Halteelementen vorgesehen ist und eine Durchführung des Thermoelements aus dem Gehäuse durch eine dafür vorgesehene Öffnung erfolgt. So kann der Temperatursensor unmittelbar an der Probenoberfläche platziert werden.

Eine weitere Ausführungsform der Erfindung sieht vor, dass die zweite Temperiereinrichtung eine Flüssigkeitstemperierung, z.B. Wasser, umfasst und die Temperaturkontrolleinrichtung derart eingerichtet ist, dass die Regelung der Temperatur der Probe auf einen SOLL-Wert durch Regelung der Temperatur der Temperierungsflüssigkeit erfolgten kann. Hierbei wird die erste Temperierungseinrichtung vorzugsweise mit konstanter Spannung betrieben und nicht geregelt. Bei der flüssigkeitsgekühlten Auslegung wird die IST-Temperatur der Probe, die von einem Sensor gemessen wird, an einen Temperaturregler rückgeführt, der auf die Kühlwasserversorgung als Stellglied einwirkt. Über den Temperaturregler kann beispielsweise eine Anpassung der Kühlwassertemperatur erfolgen.

Eine weitere Ausführungsform der Erfindung sieht vor, dass das Gehäuse, bzw. das oben genannte äußere Gehäuse, in dem die Probenhalterung ausgenommen ist, gegenüber der Umgebung hermetisch abdichtbar ist. Vorzugsweise ist ein Anschluss zum Einbringen von Arbeitsgas, oder wenigstens ein Einlass und wenigstens ein Auslass zur Durchführung von Arbeitsgas vorgesehen. So kann beispielsweise Stickstoff bei der Untersuchung im Gehäuseinneren die Bildung von Kondenswasser oder Eis bei tiefen Temperaturen verhindern. Zum Abdichten des Gehäuses können die Röntgenfenster mit einem für Röntgenstrahlen transparenten Material abgedichtet werden. Eine geeignete Folie ist unter dem Markennamen "Kapton" von E. I. du Pont de Nemours and Company (kurz DuPont), USA bekannt.

Eine weitere Ausführungsform der Erfindung sieht vor, dass Öffnungen in der hermetischen Gehäusewandung für die Durchführung von elektrischen Anschlüssen für aktive elektronische Proben, wie Batterien, vorgesehen sind.

Nach einer weiteren Ausführungsform der Erfindung sind in oder an den Halteelementen Aussparungen für die Durchführung des Röntgenstrahls vorgesehen, analog zu den Röntgenfenstern. Auch diese können mittels eines für Röntgenstrahlen transparenten Materials abgedichtet werden. Selbstverständlich können die Halteelemente jeweils auch aus mehreren Einzelelementen zusammengesetzt werden, die beabstandet voneinander angeordnet sind und eine Aussparung für die Durchführung des Röntgenstrahls bilden.

### BESCHREIBUNG DER FIGUREN

Die vorliegende Erfindung wird im Folgenden anhand lediglich bevorzugter Ausführungsbeispiele und den Zeichnungen näher erläutert. Es zeigen:
- Fig. 1a,b: eine Vorrichtung nach einer ersten Ausführungsform der Erfindung;
- Fig. 2: eine schematische Ansicht der Vorrichtung aus Figur 1 in einer geschnitten Explosionsdarstellung;
- Fig. 3: Halteelemente und erste Temperiereinrichtungen in Form von Kaskaden Peltier-Elementen der Vorrichtung aus Figur 1;
- Fig. 4: Bauteile der Vorrichtung aus Figur 1;
- Fig. 5: eine Schnittansicht der Vorrichtung aus Figur 1;
- Fig. 6: schematisch den Energiefluss der Vorrichtung aus Figur 1;
- Fig. 7: schematisch eine Vorrichtung nach einer weiteren Ausführungsform der Erfindung in einer Schnittansicht;
- Fig. 8: ein Gehäuseteil der Vorrichtung aus Figur 7 mit eingebrachten Kühlflüssigkeitskanal;
- Fig. 9: schematisch den Durchgang der Röntgenstrahlung durch die Vorrichtung aus Figur 7;
- Fig. 10: die Vorrichtung aus Figur 7 einer hermetischen Gehäuseabdichtung und einem Lineartisch zur Probenjustage;
- Fig. 11: schematisch den Regelkreis zur Temperierung einer Probe in der Vorrichtung aus Fig. 1; und
- Fig. 12: schematisch den Regelkreis zur Temperierung einer Probe in der Vorrichtung aus Fig.7.

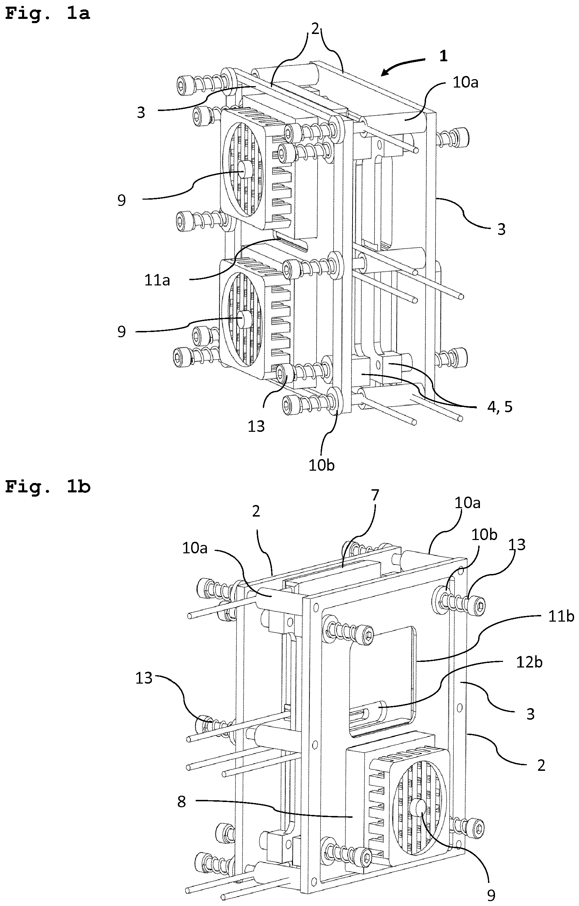

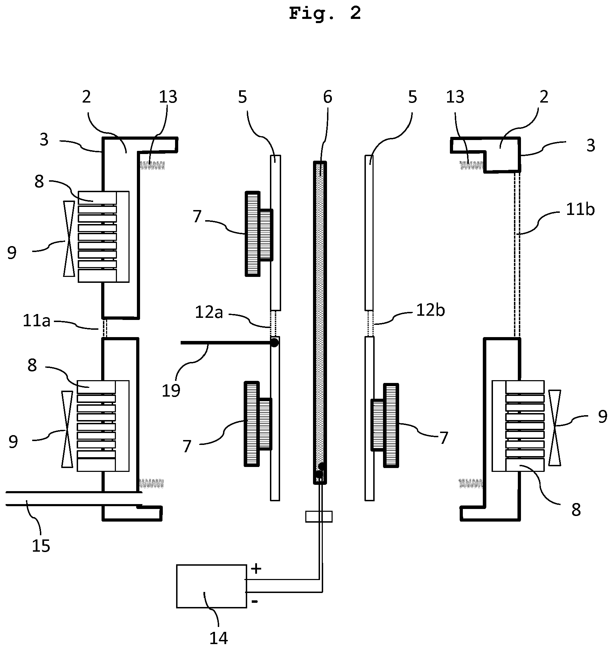

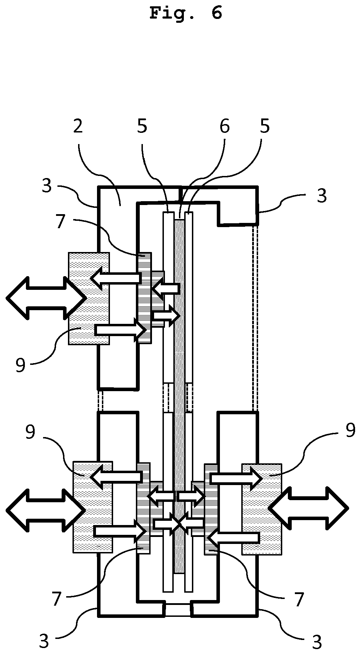

Die Figuren 1 bis 6 zeigen anhand verschiedener Darstellungen den Aufbau und schematisch die Funktionsweise einer erfindungsgemäßen Vorrichtung nach einer ersten Ausführungsform der Erfindung. Dabei zeigt Figur 2 schematisch die Anordnung der Bauteile in der in Schnittansicht einer Explosionsdarstellung. Figur 6 zeigt schematisch den Wärmeaustausch im Betrieb der Vorrichtung. Der Wärmeaustausch ist mit Pfeilen gekennzeichnet.

Die in der Figuren 1a1, 1b dargestellte Vorrichtung 1 für Röntgenuntersuchungen dient der Temperierung flacher Proben. Um den Blick auf den inneren Aufbau freizugeben, wurde eine hermetische Ummantelung, die die Vorrichtung sonst aufweist, nicht dargestellt. Die Vorrichtung 1 umfasst ein Gehäuse 2, von dem hier nur zwei vordere und hintere Wandungen 3 des Gehäuses dargestellt sind. Im Inneren des Gehäuses 2 ist eine Probenhalterung 4 angeordnet. Diese umfasst zwei plattenartige Halteelemente 5 zum Halten einer dazwischen angeordneten flachen Probe 6, wie es in der Schnittansicht in Explosionsdarstellung in Figur 2 gezeigt ist. Im Falle einer Lithium-Ionen Batterie liegt diese in Form einer sogenannten Pouch-Zelle vor. Die Pouch-Bag Bauform ermöglicht es den Außenseiten der Pouch-Zelle, sich flächig an die einander zugewandten Kontaktflächen der plattenartigen Halteelemente 5 anzulegen, so dass eine große Wärmeübertragungsfläche gewährleistet ist.

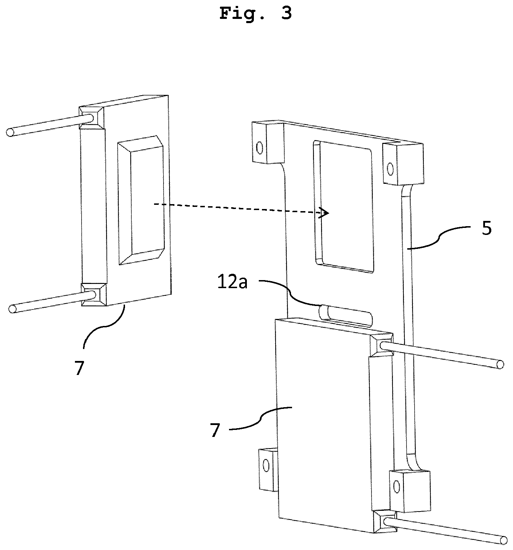

Die plattenartigen Halteelemente 5 bestehen aus Aluminium und weisen eine hohe Wärmeleitfähigkeit auf. Sie sind durch den direkten Kontakt mit der Pouch-Zelle thermisch mit dieser gekoppelt. An der von der Kontaktfläche abgewandten Seite der Halteelemente 5 sind erste Temperiereinrichtungen 7 in Form von Kaskaden Peltier-Elementen angebracht und stehen mit den Haltelementen in direktem Wärmeübertragungskontakt. Die Figur 3 zeigt diesbezüglich, wie eine der ersten Temperiereinrichtungen 7 auf einem der zwei Probenhalteelemente 5 montiert ist. Vertiefungen in den Halteelementen 5 dienen dazu, die Peltier-Elemente 7 aufzunehmen und die verbleibende Wandstärke des Halteelements für einen guten Wärmeübergang zur Probe zu minimieren.

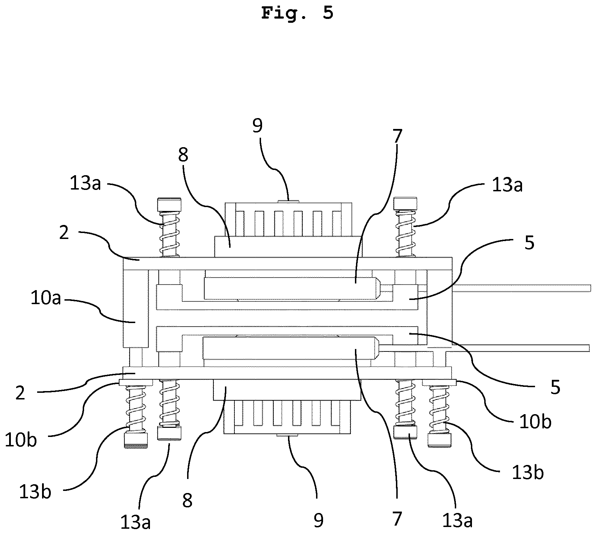

Wie anhand der schematischen Ansicht in der Figur 2 zu erkennen ist, sind die Halteelemente 5 über Spannelemente, wie Federn, gegeneinander verspannbar, um die Probe 6 zwischen sich zu halten. In den Figuren 1 und 5 sind diese Spannelemente in Form federvorgespannter Schrauben 13, die in dem äußeren Gehäuse geführt sind, dargestellt.

An der Außenseite des Gehäuses 2 (Figuren 1a, 1b, 2, 5), in einer Richtung ausgehend von der Gehäusewandung 3 in Richtung der Probe 6, beziehungsweise der Probenhalterung 4, sind vor den ersten Temperiereinrichtungen 7 jeweils zweite Temperiereinrichtungen 9 in Form kombinierter Lüfter/Kühlrippen-Einheiten zum Abführen von Wärme aus der Gehäusewandung 3 angebracht. Diese zweiten Temperiereinrichtungen 9 sind jeweils im thermischen Kopplungsbereich zwischen einer ersten Temperiereinrichtung 7 und der Gehäusewandung 3 platziert. Abgesehen von den ersten Temperiereinrichtungen 7 ist die Probenhalterung 4 von der Gehäusewandung 3 thermisch entkoppelt und wird zu diesem Zwecke über in Keramikhülsen 10a geführte Schrauben und über Keramikscheiben 10b im Gehäuse befestigt. Somit findet der direkte Wärmetransfer aus der Batterie zum Gehäuse primär über die ersten Temperiereinrichtungen 7 statt.

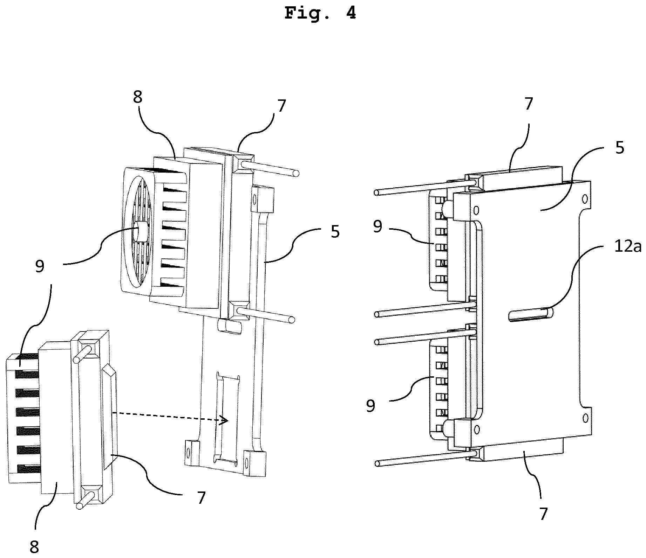

Wie man anhand Figur 4 erkennen kann, sind die Peltier-Elemente 7 an der von den Halteelementen 5 abgewandten Seite der ersten Temperiereinrichtungen mit der zweiten Temperiereinrichtung 9 thermisch gekoppelt, um einen hohes Maß an Wärmeübertragung sicherzustellen. Grundsätzlich kann das Peltier-Element direkt an der inneren Gehäusewandung 3 und die zweite Temperiereinrichtung 9 außenseitig am Gehäuse platziert werden. Im vorliegenden Fall umfasst das Gehäuse jedoch ein Wärmeübertragungselement 8, das in eine Öffnung oder ein Fenster in der Gehäusewandung 3 eingesetzt ist und für eine verbesserte Wärmeübertragung zwischen erster und zweiter Temperiereinrichtung 7, 9 sorgt, denn das Wärmeübertragungselement 8 steht gehäuseinnenseitig mit der ersten Temperiereinrichtung 7 in Kontakt und gehäuseaußenseitig mit der zweiten Temperiereinrichtung 9.

Fig. 5 zeigt die direkt gegenüberliegende Platzierung der zweiten Temperiereinrichtungen 9 zu den ersten Temperiereinrichtungen 7.

In einem mittleren Abschnitt des Gehäuses 2 sind auf gegenüberliegenden Seiten der Gehäusewandung 3 Röntgenfenster 11a, 11b ausgebildet (Figuren 1a, 1b und 2). Diese dienen zum Durchführen eines Röntgenstrahls, der durch das erste Röntgenfenster 11a in das Gehäuse 2 eindringt, die Probe 6 durchdringt und aus dem größeren zweiten Röntgenfenster 11b austritt, um anschließend auf einen Detektor zu treffen. Zum Durchführen des Röntgenstrahls durch die Halteelemente 5 weisen diese in einem mittleren Abschnitt durchgehende Aussparungen 12a und 12b auf.

Die Halteelemente 5 und die innere Gehäusewandung 3 sowie die gegenüberliegenden Gehäusewandungen 3 sind über Spannelemente 13 in Form von federvorgespannten Schrauben miteinander verbunden (siehe Figur 5). Durch die Federkraftspannkraft der Spannelemente (Federelemente) 13 werden die Peltier-Elemente an der Gehäusewandung in Richtung Probe gedrückt. Durch Bestromen der Peltier-Elemente entwickelt sich eine Temperaturdifferenz zwischen zwei Seiten des Peltier-Elements, die zum Kühlen oder Heizen der Probe bzw. des Halteelements effektiv genutzt werden. Bei dem hier dargestellten Aufbau liegen die Peltier-Elemente mit ihrer kalten Seite an den Halteelementen an. Elektrische Anschlüsse einer Batterie als Probe 6 sind abgedichtet aus dem Gehäuse 2 geführt und an einen Bi-Potentiostat 14 (Figur 2) angeschlossen, um die Batterie zu laden oder zu entladen. Elektrische Anschlüsse zum Bestromen der Peltier-Elemente sind ebenfalls abgedichtet aus dem Gehäuse geführt, aber nicht dargestellt.

Die Röntgenfenster 11 a,b und die Aussparungen 12a, 12b sind mit einer Polyamidfolie überklebt, die hohe thermische Stabilität und hohe Transmittivität für Röntgenstrahlen aufweist (z.B. Kapton-Folie).

Das Gehäuse 2 ist gegenüber der Umgebung hermetisch abgedichtet, weist aber noch zusätzliche Anschlüsse 15 (Figur 2) zum Zu- bzw. Abführen von Arbeitsgas, wie einer Stickstoffspülung, auf. So kann der innere Raum des Gehäuses 3 mit Stickstoffgas gespült werden, um Kondenswasser- bzw. Eisbildung bei tiefen Temperaturen zu verhindern.

Durch Bestromen der Peltier-Elemente kühlen diese die Haltelemente und geben die aufgenommene Wärme auf der anderen Seite des Peltier-Elements an die Gehäusewandung ab. Das Kühlen der Gehäusewandung mittels der zweiten Temperiereinrichtung führt dazu, dass die Effizienz des Peltier-Elements noch gesteigert wird.

Figur 6 zeigt schematisch den Transport von Wärmeenergie in Form von Pfeilen von/zu der Probe 6 über die Halteplatten 5 und erste Temperiereinrichtung 7 vom/zum äußeren Gehäuse 2 und dort über die zweite Temperiereinrichtung 9 nach außen an die Umgebung.

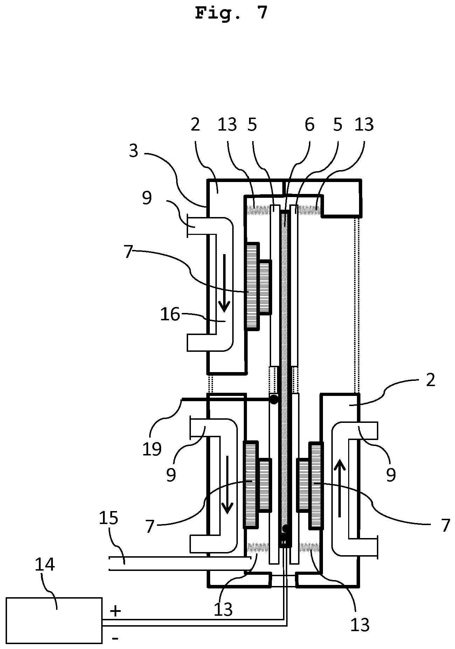

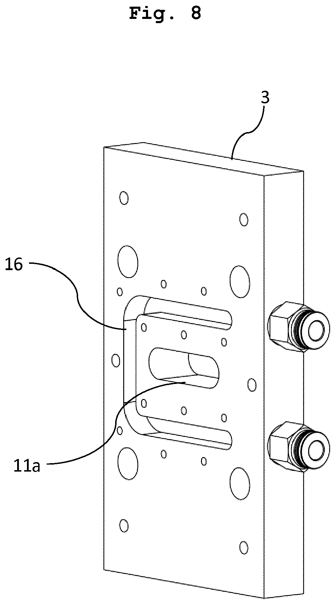

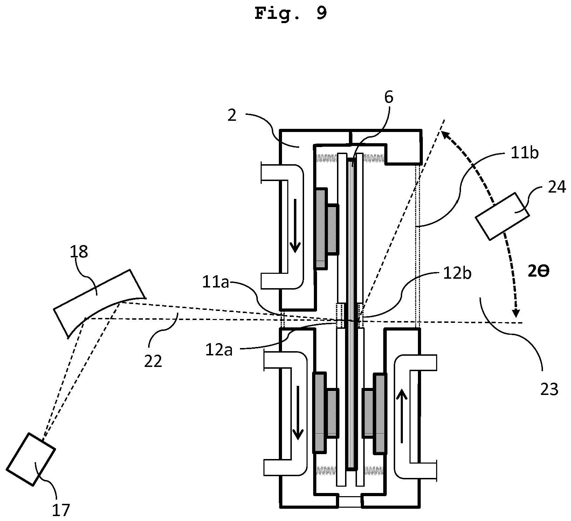

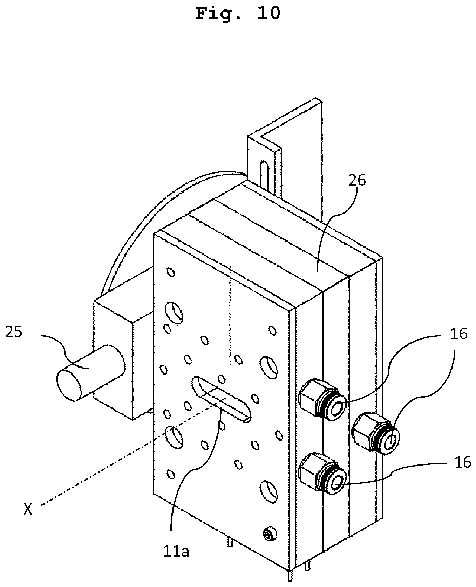

Die in der Figuren 7 bis 10 dargestellte weitere Ausführungsform unterscheidet sich von der ersten Ausführungsform darin, dass die zweite Temperiereinrichtung 9 als Flüssigkeitstemperierung ausgebildet ist. In der Gehäusewandung 3 sind hierzu Temperierungsflüssigkeitskanäle 16 verbaut (siehe Figur 8). Grundsätzlich können diese aber auch in Form von Leitungen an der Außenseite des Gehäuses 3 angebracht sein. Die zweiten Temperiereinrichtungen 9 sind an einen gemeinsamen Kühlflüssigkeitskreislauf (nicht dargestellt) angeschlossen. Figur 10 zeigt diese Ausführungsform in geschlossener Form mit hermetischer Seitenabdeckung 26, sowie angebrachten Lineartrieb 25, um die gesamte Vorrichtung samt Probe in x-Richtung bezüglich des Röntgenstrahls zu justieren. Diese Justageeinrichtung ist für beide beschriebene Ausführungsformen verwendbar. Schematisch dargestellt ist in Figur 9 ein Untersuchungsaufbau für eine röntgendiffraktometrische Analyse einer flachen Probe. Dazu wird die Vorrichtung 1 in einem Röntgendiffraktometer zwischen Röntgenstrahlemitter (Röntgenröhre) und einem Detektor installiert.

Wie in Figur 9 dargestellt, werden die Röntgenstrahlen von einer Röntgenröhre 17 ausgegeben und treffen auf eine fokussierende Röntgenoptik 18. Nach Umlenken des Röntgenstrahls tritt dieser über das erste Röntgenfenster 11a in das Gehäuse 2 ein, durchdringt die erste Aussparung 12a und anschließend die Probe 6. Die Kristallatome in der Probe bewirken, dass einfallende Röntgenstrahlen in verschiedene, kennzeichnende Richtungen gebeugt werden. Nach Durchdringen der Probe, treten die Röntgenstrahlen durch die zweite Aussparung 12b der Halteelemente aus, verlassen durch das zweite Röntgenfenster 11b das Gehäuse und treffen auf einen Detektor 24 zur Erstellung eines Beugungsmusters.

Das in der Probe gestreute und unter dem Winkel 2θ austretende Röntgenlicht wird mittels eines Röntgenlicht sensitiven Sensors auf der Ausgangsseite in dem Detektor 24 detektiert. In einem (eindimensionalen) Diffraktogramm werden die gemessenen Strahlungsintensitäten gegen den Winkel zwischen Strahlungsquelle, Probe und Detektor (2θ-Winkel) aufgetragen. Die Probe selbst wird während der Messung nicht bewegt. Im Falle von Batterien als Probe werden die Streupeaks im Diffraktogramm, die von den in der Batterie verbauten passiven Bauteilen wie z.B. Kupferanode oder Aluminiumummantelung herrühren, zur korrekten Justage der Batterie in Strahlrichtung verwendet. Dazu wird die auf einem Lineartisch 25 montierte Vorrichtung 1 mitsamt eingebauter Batterie so weit in Längsrichtung verfahren, bis diese Referenzpeaks an der theoretisch korrekten Position liegen.

Anschließend können verschiedene Betriebsvarianten untersucht werden, wobei die ersten und zweiten Temperiereinrichtungen die Temperatur der Probe auf einem vorbestimmten und konstanten Niveau halten.

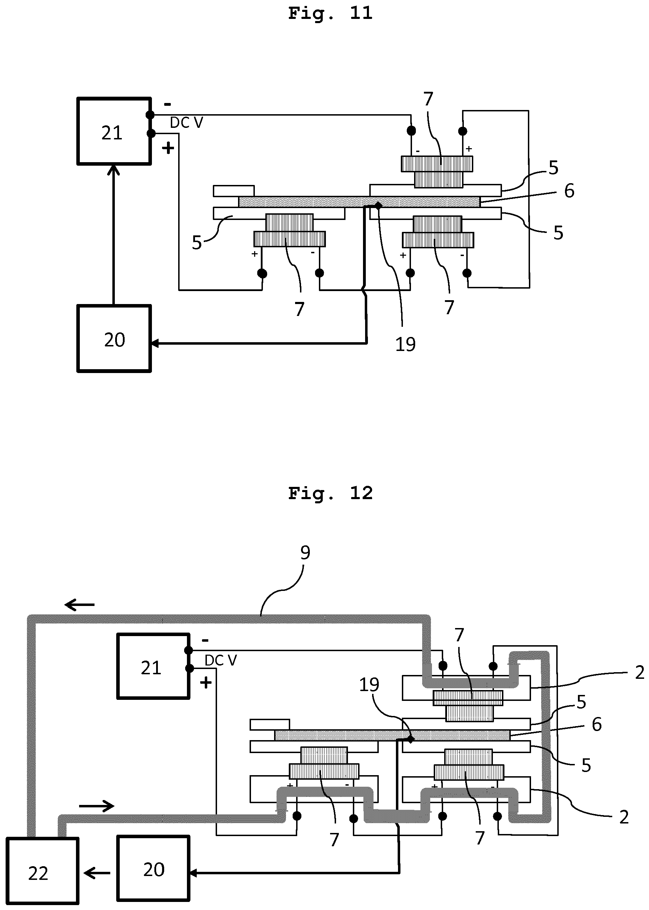

Figur 11 zeigt schematisch den Regelkreis für eine luftgekühlte Auslegung bei der Temperierung der Probe 6. Der Regelkreis ist Teil einer Temperaturkontrolleinrichtung, die in Wirkverbindung mit den ersten Temperiereinrichtungen 7 steht und die dazu eingerichtet ist, eine Temperatur der Probe 6 durch Regelung der ersten Temperiereinrichtungen 7 (Peltier-Elemente) auf einen SOLL-Wert einzustellen.

Ein an die Probe 6 angeschlossener Temperatursensor 19 misst die Temperatur der Probe 6. Das Temperatursignal (Messglied) wird als IST-Signal an einen Temperaturregler rückgeführt, der unter Berücksichtigung der SOLL-Temperatur ein regelbares Netzteil 21 als Stellglied ansteuert, welches die ersten Temperiereinrichtungen 7 mit Spannung versorgt. Durch Umpolung der Peltier-Elemente können diese auf Heizbetrieb umgeschaltet werden.

Figur 12 zeigt schematisch den Regelkreis für eine flüssigkeitsgekühlte Auslegung bei der Temperierung der Probe 6. Der Regelkreis ist auch hier Teil einer Temperaturkontrolleinrichtung, die in Wirkverbindung mit der zweiten Temperiereinrichtungen 9 in Form einer Flüssigkeitskühlung (siehe Figur 7) steht und die dazu eingerichtet ist, eine Temperatur der Probe 6 durch Regelung der zweiten Temperiereinrichtung 9 auf einen SOLL-Wert einzustellen. Die Regelung erfolgt durch Einstellen der Vorlauftemperatur des Kühlwassers.

Ein an die Probe 6 angeschlossener Temperatursensor 19 misst die Temperatur der Probe 6. Das Temperatursignal (Messglied) wird als IST-Signal an einen Temperaturregler 20 rückgeführt, der unter Berücksichtigung der SOLL-Temperatur die Kühlwasserversorgung (Stellglied) 22 ansteuert. Das Netzteil 21 wird mit konstanter Spannung versorgt. Die ersten Temperiereinrichtungen 7 sind in Reihenschaltung verbaut und werden mit konstanter Leistung betrieben. Grundsätzlich kann auch die in Figur 12 dargestellte zweite Temperiervorrichtung auf Heizbetrieb umgestellt werden.

### Bezugszeichenliste

- 1: Vorrichtung für Röntgenuntersuchungen
- 2: Gehäuse
- 3: Gehäusewandung
- 4: Probenhalterung
- 5: Halteelement
- 6: Probe (Lithium-Ionen-Akku)
- 7: Erste Temperiereinrichtung
- 8: Wärmeübertragungselement
- 9: Zweite Temperiereinrichtung
- 10a: Keramikhülse
- 10b: Keramikscheibe
- 11a,b: Röntgenfenster
- 12a,b: Aussparung
- 13: Spannelemente
- 14: Bi-Potientiostat
- 15: Arbeitsgasanschluss
- 16: Temperierflüssigkeitskanal
- 17: Röntgenröhre
- 18: Fokussierende Optik
- 19: Temperatursensor
- 20: Temperaturregler
- 21: Netzteil
- 22: eintretender Röntgenstrahl
- 23: austretender Röntgenstrahl
- 24: Röntgendetektor
- 25: Linearantrieb
- 26: hermetische Gehäuseabdichtung

## Patentansprüche

1. Vorrichtung (1) zum Einspannen von flachen Proben (6), insbesondere von Pouch-Batteriezellen, für die Röntgendiffraktometrie, wobei die Vorrichtung
ein Gehäuse (2) mit einer Probenhalterung (4), die Haltelemente (5) zum Einspannen der Probe (6) aufweist, wobei an den Halteelementen (5) jeweils Aussparungen (12a, 12b) für die Durchführung des Röntgenstrahls vorgesehen sind,
wenigstens zwei Röntgenfenster (11a, 11b) zum Ein- und Auslassen von Röntgenstrahlen, und
mindestens eine erste Temperiereinrichtung (7) zum Temperieren der Probe (6) aufweist,
wobei die erste Temperiereinrichtung (7) mit dem Gehäuse thermisch gekoppelt ist, und
wobei die Vorrichtung wenigstes eine zweite Temperiereinrichtung (9) aufweist, die dazu eingerichtet ist, Wärme, die von der ersten Temperiereinrichtung (7) an das Gehäuse (2) abgegeben wird, aus dem Gehäuse (2) nach außen abzuführen und/oder Wärme von außen in das Gehäuse (2) einzubringen
**dadurch gekennzeichnet, dass** die Haltelemente (5) plattenförmig ausgestaltet sind und einander zugewandte Kontaktflächen zum Einspannen der Probe (6) aufweisen, wobei auf der von der jeweiligen Kontaktfläche abgewandten Seite der Haltelemente (5) jeweils wenigstens eine erste Temperiereinrichtung (7) angebracht ist, und wobei ein Federmechanismus zum gegenseitigen Verspannen der Halteelement (5) vorgesehen ist.

2. Vorrichtung nach Anspruch 1, **dadurch gekennzeichnet, dass** die Halteelemente (5) als parallel angeordnete Platten ausgestaltet sind.

3. Vorrichtung nach einem der vorhergehenden Ansprüche, **dadurch gekennzeichnet, dass** die Probenhalterung (4) mittels Wärmeentkopplungselementen (10) in dem Gehäuse (2) befestigt ist.

4. Vorrichtung nach einem der vorhergehenden Ansprüche, **dadurch gekennzeichnet, dass** die zweite Temperiereinrichtung (9) aktive und/oder passive Mittel zum Zu- und/oder Abführen von Wärme aus und/oder in die Gehäusewandung (3) umfasst.

5. Vorrichtung nach einem der vorhergehenden Ansprüche, **gekennzeichnet durch** eine Temperaturkontrolleinrichtung (20), die in Wirkverbindung mit der ersten und/oder der zweiten Temperiereinrichtung (7, 9) steht und die dazu eingerichtet ist, eine Temperatur der Probe (6) durch Steuerung/Regelung der ersten und/oder zweiten Temperiereinrichtung (7, 9) einzustellen.

6. Vorrichtung nach Anspruch 5, **dadurch gekennzeichnet, dass**
a) dass die zweite Temperiereinrichtung (9) Mittel zur aktiven und/oder passiven Lufttemperierung umfasst und die Temperaturkontrolleinrichtung derart eingerichtet ist, dass die Regelung der Temperatur der Probe (6) durch Regelung der Energieversorgung der ersten Temperiereinrichtung (7) erfolgen kann; und/oder
b) dass die zweite Temperiereinrichtung (9) eine Flüssigkeitstemperierung umfasst, und die Temperaturkontrolleinrichtung derart eingerichtet ist, dass die Regelung der Temperatur der Probe durch Regelung der Temperatur der Temperierungsflüssigkeit erfolgen kann, wobei die erste Temperierungseinrichtung (7) vorzugsweise mit konstanter Spannung betrieben wird.

7. Vorrichtung nach einem der vorhergehenden Ansprüche, **dadurch gekennzeichnet, dass** mehrere zweite Temperiereinrichtungen (9) an und/oder in der Gehäusewandung (3) vorgesehen sind, wobei wenigstens eine zweite Temperiereinrichtungen (9) jeweils im thermischen Kopplungsbereich zwischen einer ersten Temperiereinrichtung (7) und dem Gehäuse (2) angeordnet ist.

8. Vorrichtung nach einem der vorhergehenden Ansprüche, **dadurch gekennzeichnet, dass** die erste Temperiereinrichtung (7) wenigstens ein Peltier-Element umfasst, wobei vorzugsweise mehrere Peltier-Elemente in Reihe geschaltet sind.

9. Vorrichtung nach einem der vorhergehenden Ansprüche, **dadurch gekennzeichnet, dass** das Gehäuse (2) gegenüber der Umgebung hermetisch abdichtbar ist und wenigstens einen Anschluss zum Einbringen von Arbeitsgas in das Gehäuse aufweist.

10. Vorrichtung nach einem der vorhergehenden Ansprüche, **dadurch gekennzeichnet, dass** sie derart ausgebildet ist, dass die Temperiereinrichtungen ohne kryogene Kältemittel arbeiten.

11. Verwendung der Vorrichtung (1) nach einem der vorhergehenden Ansprüche zum Einspannen von flachen Proben (6), insbesondere von Pouch-Batteriezellen, für die Röntgendiffraktometrie.

## Claims

1. Device (1) for clamping flat samples (6), in particular pouch battery cells, for x-ray diffractometry, wherein the device
comprises a housing (2) having a sample holder (4), which comprises holding elements (5) for checking the sample (6), wherein recesses (12a, 12b) for the feedthrough of the x-ray beam are provided on each of the holding elements (5),
at least two x-ray windows (11a, 11b) for letting in and out x-ray beams, and
at least one first temperature control unit (7) for the temperature control of the sample (6),
wherein the first temperature control unit (7) is thermally coupled to the housing, and
wherein the device comprises at least one second temperature control unit (9), which is configured to dissipate heat, which is discharged from the first temperature control unit (7) to the housing (2), outwards out of the housing (2) and/or to introduce heat from the outside into the housing (2),
**characterized in that** the holding elements (5) are designed as plate-shaped and comprise contact surfaces facing towards one another for clamping the sample (6), wherein at least one temperature control unit (7) is attached in each case to the side of the holding elements (5) facing away from the respective contact surface, and wherein a spring mechanism is provided for the mutual tensioning of the holding element (5).

2. Device according to Claim 1, **characterized in that** the holding elements (5) are designed as plates arranged in parallel.

3. Device according to any one of the preceding claims, **characterized in that** the sample holder (4) is fastened in the housing (2) by means of heat decoupling elements (10).

4. Device according to any one of the preceding claims, **characterized in that** the second temperature control unit (9) comprises active and/or passive means for supplying and/or dissipating heat into and/or out of the housing wall (3).

5. Device according to any one of the preceding claims, **characterized by** a temperature monitoring unit (20), which is operationally connected to the first and/or the second temperature control unit (7, 9) and is configured to set a temperature of the sample (6) by controlling/regulating the first and/or second temperature control unit (7, 9).

6. Device according to Claim 5, **characterized in that**
a) the second temperature control unit (9) comprises means for active and/or passive air temperature control and the temperature monitoring unit is configured in such a way that the regulation of the temperature of the sample (6) can be performed by regulating the power supply of the first temperature control unit (7); and/or
b) the second temperature control unit (9) comprises a liquid temperature control, and the temperature monitoring unit is configured in such a way that the regulation of the temperature of the sample can be performed by regulating the temperature of the temperature control liquid, wherein the first temperature control unit (7) is preferably operated at constant voltage.

7. Device according to any one of the preceding claims, **characterized in that** multiple second temperature control units (9) are provided on and/or in the housing wall (3), wherein at least one second temperature control unit (9) is arranged in each case in the thermal coupling region between a first temperature control unit (7) and the housing (2).

8. Device according to any one of the preceding claims, **characterized in that** the first temperature control unit (7) comprises at least one Peltier element, wherein preferably multiple Peltier elements are connected in series.

9. Device according to any one of the preceding claims, **characterized in that** the housing (2) can be hermetically sealed in relation to the surroundings and comprises at least one fitting for introducing working gas into the housing.

10. Device according to any one of the preceding claims, **characterized in that** it is designed in such a way that the temperature control units operate without cryogenic refrigerant.

11. Use of the device (1) according to any one of the preceding claims for clamping flat samples (6), in particular pouch battery cells, for x-ray diffractometry.

## Revendications

1. Dispositif (1) de montage d'échantillons plats (6), en particulier de cellules de batterie de type « pouch », pour la diffractométrie de rayons X, le dispositif présentant
un boîtier (2) avec un support d'échantillon (4) comportant des cellules de support (5) pour le montage de l'échantillon (6), des évidements (12a, 12b) étant respectivement prévus sur les éléments de support (5), en vue du passage du rayonnement X,
au moins deux fenêtres pour rayons X (11a, 11b) destinées à l'entrée et la sortie de rayons X, et
au moins un premier système d'équilibrage de température (7) pour équilibrer la température de l'échantillon (6),
le premier système d'équilibrage de température (7) étant couplé thermiquement au boîtier, et
le dispositif présentant au moins un deuxième système d'équilibrage de température (9) qui est conçu pour évacuer la chaleur, transmise au boîtier (2) par le premier dispositif d'équilibrage de température (7), du boîtier (2) vers l'extérieur et/ou pour amener de la chaleur de l'extérieur dans le boîtier (2),
**caractérisé en ce que** les éléments de support (5) sont réalisés sous forme de plaques et présentent des surfaces de contact tournées les unes vers les autres, en vue du montage de l'échantillon (6), sachant que sur la face des éléments de support (5) qui est éloignée de la surface de contact respective, il est prévu au moins un premier système d'équilibrage de température (7), et qu'un mécanisme à ressort est prévu pour la mise sous précontrainte réciproque des éléments de support (5).

2. Dispositif selon la revendication 1, **caractérisé en ce que** les éléments de support (5) sont réalisés sous forme de plaques disposées parallèlement.

3. Dispositif selon l'une des revendications précédentes, **caractérisé en ce que** le support d'échantillon (4) est fixé dans le boîtier (2) au moyen d'éléments de découplage thermique (10).

4. Dispositif selon l'une des revendications précédentes, **caractérisé en ce que** le deuxième système d'équilibrage de température (9) comprend des moyens actifs et/ou passifs pour l'apport et/ou l'évacuation de chaleur de la paroi de boîtier (3) et/ou dans celle-ci.

5. Dispositif selon l'une des revendications précédentes, **caractérisé par** un système de contrôle de température (20) qui est en liaison fonctionnelle avec le premier et/ou le deuxième système d'équilibrage de température (7, 9) et qui est conçu pour régler une température de l'échantillon (6), par commande/régulation du premier et/ou deuxième système d'équilibrage de température (7, 9).

6. Dispositif selon la revendication 5, **caractérisé en ce que**
a) le deuxième système d'équilibrage de température (9) comprend des moyens d'équilibrage actif et/ou passif de la température de l'air, et que le système de contrôle de température est conçu de manière à ce que la régulation de la température de l'échantillon (6) puisse être effectuée en régulant l'alimentation en énergie du premier système d'équilibrage de température (7) ; et/ou
b) le deuxième système d'équilibrage de température (9) comprend un équilibrage de température de liquide, et que le système de contrôle de température est conçu de manière à ce que la régulation de la température de l'échantillon puisse être effectuée en régulant la température du liquide d'équilibrage de température, le premier système d'équilibrage de température (7) fonctionnant de préférence avec une tension constante.

7. Dispositif selon l'une des revendications précédentes, **caractérisé en ce que** plusieurs deuxièmes systèmes d'équilibrage de température (9) sont prévus sur et/ou dans la paroi de boîtier (3), au moins un deuxième système d'équilibrage de température (9) étant disposé respectivement dans la zone de couplage thermique entre un premier système d'équilibrage de température (7) et le boîtier (2).

8. Dispositif selon l'une des revendications précédentes, **caractérisé en ce que** le premier système d'équilibrage de température (7) comprend au moins un élément Peltier, sachant que de préférence, plusieurs éléments Peltier sont montés en série.

9. Dispositif selon l'une des revendications précédentes, **caractérisé en ce que** le boîtier (2) peut être rendu hermétiquement étanche vis-à-vis de son environnement et présente au moins un raccord pour l'introduction d'un gaz de travail dans le boîtier.

10. Dispositif selon l'une des revendications précédentes, **caractérisé en ce qu'**il est conçu de manière à ce que les systèmes d'équilibrage de température fonctionnent sans fluides frigorigènes cryogéniques.

11. Utilisation du dispositif (1) selon l'une des revendications précédentes, pour le montage d'échantillons plats (6), en particulier de cellules de batterie de type « pouch », pour la diffractométrie de rayons X.
